# EUROPEAN PATENT APPLICATION

(11) **EP 4 513 404 A1**
(43) Date of publication of application: **26.02.2025**
(21) Application number: 23192715.3
(22) Date of filing: 22.08.2023
(51) Int. Cl.: G06Q 10/0832

(54) **A DEVICE AND METHOD FOR MONITORING PERISHABLE GOODS**

(71) Applicant: SkoneLabs GmbH, 12053 Berlin (DE)
(72) Inventor: KONETI, Siddardha, 68169 Mannheim (DE); AGRAWAL, Nishit, 55743 Idar-Oberstein (DE)
(74) Representative: Aera A/S

(57) **Abstract**

Disclosed herein is an electronic device comprising interface circuitry, processor circuitry, and memory circuitry. The electronic device is configured to obtain, from one or more sensors, sensor data indicative of one or more environmental conditions of a food storage area for storing food items. The electronic device is configured to receive, from a second electronic device, control information comprising a plurality of criteria associated with the food items in the food storage area. The electronic device is configured to determine whether the sensor data satisfies at least one of a plurality of criteria. The electronic device is configured to in accordance with the determination that the sensor data does not satisfy at least one criterion of the plurality of criteria, transmit a message to the second electronic device.

## Description

### TECHNICAL FIELD

The present disclosure pertains generally to the field of electronics and Internet of Things (IoT) devices. The present disclosure relates to electronic devices and related methods for monitoring a condition of a consumable item in a storage space, such as the condition of perishable goods in a storage space.

### BACKGROUND

The global supply chain faces a persistent challenge in the form of loss and damage. Especially, global food supply chain faces critical challenges in the form of food loss and wastage. Food loss and wastage are multifaceted problems with severe consequences on a global scale. At the production level, inadequate harvesting capabilities and storage practices, as well as unfavourable weather conditions, may contribute to substantial losses of perishable agricultural goods due to spoilage. During transportation and distribution, inefficiencies in logistics and infrastructure lead to further spoilage and waste. At the consumer level, improper storage, and misinterpretation of expiration are some of the issues behind significant food loss and food wastage.

In the context of fresh produce preservation, mitigating the risk of loss and damage has become a prevalent practice in the industry.

### SUMMARY

Approaches involve manual observation and the use of sensing devices to support observation, as recommended by appropriate governmental authorities. These methods aim to monitor factors like temperature and humidity. However, relying solely on static sensing devices and manual observations is insufficient to effectively tackle the problems of food loss and food wastage.

Accordingly, there is a need for electronic device and method which can effectively determine and communicate the condition of a storage space, such as food storage space, and the state of the food items, such as fresh produce in the storage space.

There is a need for devices and methods which may mitigate, alleviate, or address the existing shortcomings, for example by determining the conditions of the storage space of perishables that may affect the quality of the fresh produce and leads to damage, and/or spoilage and by communicating accordingly.

Disclosed herein is an electronic device, such as a first electronic device. The first electronic device is configured for monitoring storage spaces, such as fresh produce storage space. The first electronic device comprises interface circuitry. The electronic device comprises process circuitry. The first electronic device comprises memory circuitry. The first electronic device is configured to obtain, from one or more sensors, sensor data indicative of one or more environmental conditions of a food storage area for storing food items. The first electronic device is configured to receive, from a second electronic device, control information comprising a plurality of criteria associated with the food items in the food storage area. The first electronic device is configured to determine whether the sensor data satisfies at least one of a plurality of criteria. The first electronic device is configured to transmit a message to the second electronic device, in accordance with the determination that the sensor data does not satisfy at least one criterion of the plurality of criteria,.

Also disclosed herein is a method for monitoring a food storage area. The method is performed by an electronic device. The method comprises obtaining, from one or more sensors, sensor data indicative of one or more environmental conditions of a food storage area for storing food items. The method comprises receiving, from a second electronic device, control information comprising a plurality of criteria associated with the food items in the food storage area. The method comprises determining whether the sensor data satisfies at least one of a plurality of criteria. The method comprises transmitting a message to the second electronic device in accordance with the determination that the sensor data does not satisfy at least one criterion of the plurality of criteria.

It is an advantage of the present disclosure that an electronic device, such as the first electronic device, can be configured to monitor for plurality of food items storage conditions. This reduces the need to have multiple devices for multiple storage conditions. For example, the first electronic device can be configured to monitor conditions in a banana storage facility for storing bananas, and the same electronic device can be configured to monitor the conditions for ripening of bananas.

It is an advantage of the present disclosure that the first electronic device can monitor the storage space where bulk produce is stored. In other words, the first electronic device makes it convenient to monitor state, and spoilage of bulk produce. Further, it is an advantage that the electronic device, such as the first electronic device, can provide monitoring and communication of e.g. notifications without any contact with the food item. So, it may help to improve storage longevity of the food item and hygiene.

It is an advantage of the present disclosure that the electronic device can be used in vivid storage area, and spaces, such as food storage areas, a room, a truck container, a shipping container, a silo, a box, a package, a refrigeration unit, a tank. This may lead to the improve the transparency and optimization of the supply chain and potentially reduces the cost of operations.

It is an advantage of the present disclosure that safety conditions in the storage spaces can be improved by dynamic monitoring and reporting the concentrations of selective gases in the environment. For example, Ethylene is a colorless and odor less gas used for ripening of fruits or released when fruits are ripened, breathing this would be hazardous to the personal at the facility.

It is an advantage of the present disclosure that dynamic monitoring of the environment of the bulk produce, such as fruits, vegetables, cheese, milk, wine, water storage space can reduce spoilage and loss of bulk food.

It is an advantage of the present disclosure that electronic device can be a plug and play device which reduces the number of personnel needed for maintenance and monitoring of the food items.

### BRIEF DESCRIPTION OF THE DRAWINGS

The above and other features and advantages of the present disclosure will become readily apparent to those skilled in the art by the following detailed description of example embodiments thereof with reference to the attached drawings, in which:
Fig. 1 is a schematic diagram illustrating an example system comprising a first electronic device according to this disclosure,
Fig. 2 is a schematic diagram illustrating an example scenario involving the first electronic device according to this disclosure,
Fig. 3 is a schematic diagram illustrating an example scenario involving the first electronic device according to this disclosure,
Fig. 4 is a flow-chart illustrating an example method, performed by first electronic device according to this disclosure, and
Fig. 5 is a block diagram illustrating an example first electronic device according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Disclosed herein are devices, systems, assemblies, and/or methods for monitoring a storage area, such as a food storage area. The present disclosure allows for a monitoring of the food storage area's environment that can continuously and/or periodically assist in maintaining the appropriate conditions for storing food items in the food storage area. This may lead to reduction in the spoilage of the food items, resulting in a reduction in the food loss and wastage. The disclosed system allows for configuring the monitoring of the environmental conditions of the food storage area which influences the state of the food items stored in the food storage area. For example, the disclosed system allows for configuring the monitoring of gas to detect spoiled or rotten food in the food storage area as spoiled food items may lead to change in the concentration of gases, such as methane, in the food storage area.

The first electronic device disclosed herein can be configured to communicate with other electronic devices, such as other electronic devices similar to the first electronic device, a mobile communication device, consumer electronic devices, gateway devices, sensor devices and/or server devices.

The first electronic device can be configured to connect to a second electronic device, such as a second electronic device (e.g., a mobile communication device), via a wired and/or wireless connection. The connection can be wired and/or wireless connections. The first electronic device can be an Internet-of- Things (IoT) device.

The figures are schematic and simplified for clarity, and they merely show details which aid understanding the disclosure, while other details have been left out. Throughout, the same reference numerals are used for identical or corresponding parts.

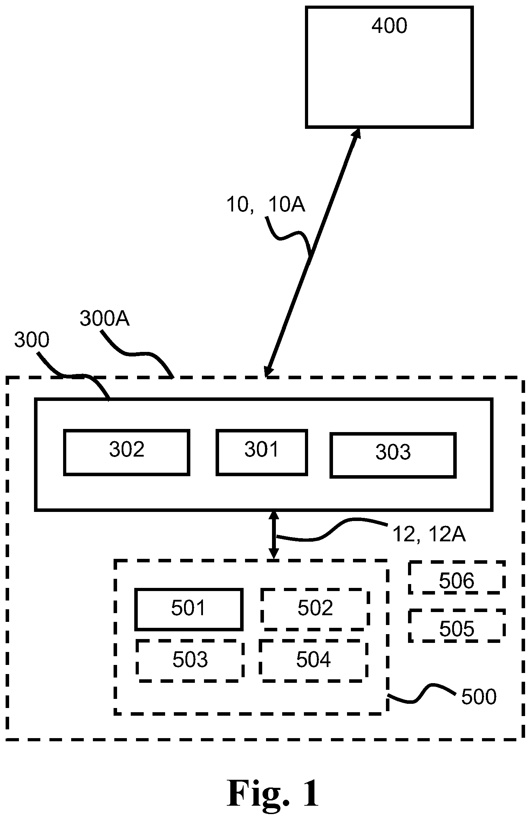

Fig. 1 shows a schematic diagram of an example system comprising a first electronic device 300, 300A according to the disclosure. The first electronic device 300 comprises memory circuitry 301. The first electronic device 300, 300A comprises processor circuitry 302. The electronic device comprises interface circuitry 303, for wired and/or wireless communication.

The first electronic device 300, 300A is configured to obtain, from one or more sensors, sensor data indicative of one or more environmental conditions of a food storage area for storing food items. In one or more example first electronic devices, the first electronic device 300, 300A is configured to obtain 12, via interface circuitry 303, sensor data from a sensor, such as an external sensor and/or an internal sensor. The first electronic device 300, 300A may obtain sensor data from one or more sensors, such as a first sensor 501, a second sensor 502, and optionally a third sensor 503, and optionally a fourth sensor 504. In one or more example first electronic devices, the first electronic device 300A comprises the first sensor 501. In one or more example first electronic devices, the first sensor 501 illustrated in Fig. 1 is outside the first electronic device 300, thereby an external sensor.

In one or more example first electronic devices, the first electronic device 300, 300A connects, via wired and/or wireless connection, with the first sensor 501.

In one or more example first electronic devices, the first sensor 501, the second sensor 502, the third sensor 503, and/or the fourth sensor 504 may be a part of a sensor module 500. In one or more example first electronic devices, the sensor module 500 connects, via wired and/or wireless connection, with the first electronic device 300, 300A. The sensor module 500 may be internal or external to the first electronic device.

It may be appreciated that in some examples, the one or more sensors, such as the first sensor 501, are placed in the vicinity of the food storage area, and/or embedded in storage equipment.

In one or more example first electronic devices, the one or more sensors comprise one or more sensors internal to the first electronic device, and/or one or more sensors external to the first electronic device. In one or more example first electronic devices, the one or more sensors are internal to the first electronic device 300A. In one or more example first electronic devices, the one or more sensors are external to the first electronic device 300.

In one or more example first electronic devices, the one or more sensors, such as the first sensor 501, the second sensor 502, the third sensor 503, and/or the fourth sensor 504, may be one or more of: a temperature sensor, a humidity sensor, a vibration measuring sensor, an audio sensor, a light sensor, an image sensor, a GPS sensor, a pressure sensor, a gas sensor, a liquid level sensor, and a pH sensor. In other words, the first electronic device 300, 300A may obtain sensor data from one or more of: a temperature sensor, a humidity sensor, a vibration measuring sensor, an audio sensor, a light sensor, an image sensor, a GPS sensor, a pressure sensor, a gas sensor, a liquid level sensor, and a pH sensor. For example, the first sensor 501 may be a temperature sensor, the second sensor 502 may be a humidity sensor, the third sensor 503 may be a gas sensor and the fourth sensor 504 may also be a gas sensor. For example, when monitoring the environmental conditions in a storage tanker for liquids, the first sensor 501 may be a temperature sensor, the second sensor 502 may be a humidity sensor, the third sensor 503 may be a gas sensor and the fourth sensor 504 may be a liquid level sensor or a pH sensor.

In one or more example first electronic devices, the sensor data comprises one or more of: temperature data, humidity data, and gas composition data.

In one or more example first electronic devices, the sensor data may comprise sensor data from the one or more of the first sensor 501, the second sensor 502, the third sensor 503, and the fourth sensor 504.

In one or more example first electronic devices, the sensor data may comprise sensor data from the first sensor 501. In one or more example first electronic devices, the first sensor 501 may be configured to measure one or more of: temperature, humidity, and a gas composition, such as a gas composition indicative of quality of air of the environment in a food storage area.

In one or more example first electronic devices, the first electronic device 300, 300A comprises a first sensor, such as the first sensor 501, configured to obtain first sensor data. In one or more example first electronic devices, the first electronic device 300, 300A comprises a second sensor, such as the second sensor 502, configured to obtain second sensor data (e.g. different from the first sensor data). In one or more example first electronic devices, the first electronic device 300, 300A comprises a third sensor, such as the third sensor 503, configured to obtain third sensor data (e.g. different from the first sensor data and/or from the second sensor data). In one or more example first electronic devices, the third sensor 503 may be a first gas sensor configured to obtain gas data, such as a first gas data, such as ethylene gas data. In one or more example first electronic devices, the first electronic device 300, 300A comprises a fourth sensor, such as the fourth sensor 504, configured to obtain fourth sensor data. In one or more example first electronic devices, the fourth sensor 504 may be a second gas sensor configured to obtain gas data, such a second gas data, such as methane gas data.

In one or more example first electronic devices, the sensor data, such as the temperature data, may be indicative of temperature in a food storage area in which one or more sensors, such as the first sensor 501, are present and/or placed. In one or more example first electronic devices, the temperature data may be indicative of temperature around the sensor, such as the first sensor 501.

In one or more example first electronic devices, the sensor data, such as the humidity data, may be indicative of the humidity in a storage area in which one or more sensors, such as the first sensor 501, are present and/or placed. In one or more example first electronic devices, the humidity data may be indicative of the humidity around the sensor, such as the second sensor 502.

In one or more example first electronic devices, the sensor data, such as the gas data may be indicative of presence, and/or composition of the gas, such as ethylene, in a storage area in which one or more sensors, such as the third sensor 501, are present. In one or more example first electronic devices, the gas data may be indicative of the gas presence, and/or composition of the gas around the sensor, such as the second sensor 502.

In one or more example first electronic devices, the gas composition data comprises one or more of: carbon dioxide data, oxygen data, methane data, ethylene data, hydrogen sulfide data, nitrogen dioxide data, nitrogen data, and hydrogen data.

In one or more example first electronic devices, the one or more sensors, such the first sensor 501, the second sensor 502, the third sensor 503, and/or the fourth sensor 504, may be one or more of Micro Electromechanical Systems (MEMS) sensor, an electrochemical sensor, volatile organic compound (VOC) sensor, and a Non-Dispersive Infrared (NDIR) sensor.

In one or more example first electronic devices, the sensor data comprises sensor data from one or more of the first sensor 501, the second sensor 502, the third sensor 503, and/or the fourth sensor 504. In one or more example first electronic devices, the first sensor 501 may be a temperature sensor, the second sensor 502 may be a humidity sensor, the third sensor 503 may be a gas sensor, and/or the fourth sensor may be a gas sensor. In other words, the sensor data may comprise temperature data from the first sensor 501, humidity data from the second sensor, a gas data from the third sensor 503, and/or a gas data from the fourth sensor 504. In one or more example first electronic devices, the one or more sensors may comprise one or more temperature sensors. In one or more example first electronic devices, the one or more sensors may comprise one or more humidity sensors. In one or more example first electronic devices, the one or more sensors may comprise one or more gas sensors. In one or more example first electronic devices, the one or more sensors may comprise one or more gas sensors configured to monitor one gas. In one or more example first electronic devices, the one or more sensors may comprise one or more gas sensors configured to monitor multiple gases. For example, in one or more example first electronic devices, all the sensors may be gas sensors configured to monitor one gas in the environment, such as carbon dioxide, oxygen, ethylene, ethylene oxide, nitrogen, hydrogen sulfide, carbon monoxide, and hydrogen.

In one or more example first electronic devices, the sensors may comprise gas sensors configured to monitor different gases in the environment, such as carbon dioxide, oxygen, ethylene, ethylene oxide, nitrogen, hydrogen sulfide, methane, carbon monoxide, and hydrogen. For example, the first sensor 501 may be configured to measure composition of oxygen in an environment, the second sensor 502 may be configured to measure carbon dioxide in the environment, the third sensor 503 may be configured to measure methane in the environment, and/or the fourth sensor 504 may be configured to measure ethylene in the environment.

In one or more example first electronic devices, the sensor data may be indicative of one or more environmental conditions of a food storage area for storing food items. In one or more example first electronic devices, the food storage area is a part of a warehouse, a storage room, a closed room, an open room, a truck, a container, a shipping container, a refrigerator, a box, a rack, a shelf, a tanker, and/or a silo. For example, the food storage area may be a fruit ripening area where the fruits are ripened, and/or a transporting/shipping container storing food items. In one or more example first electronic devices, the food storage area may be a tanker and/or a barrel to store food items.

In one or more example first electronic devices, the food items are unsealed fresh produce comprising one or more of: fruits, vegetables, meat, grains, and dairy products. In one or more example first electronic devices, the food items are fresh produce comprising one or more of: fruits, vegetables, meat, grains, and dairy products.

In one or more example first electronic devices, the food items comprise solid food items, such as vegetables, fruits, greens, cheese, meat, fish, eggs, beans, cereals, grains, grain powder, such as grinded grains, sugar, and/or salt. In one or more example first electronic devices, the food items comprise dry food items.

In one or more example first electronic devices, the food items comprise liquid items, such as milk, wine, water, and/or alcohol. The liquid items may be of various viscosity and/or texture. In one or more example first electronic devices, the food items comprise semi solid and/or semi liquid items, such as batter.

In one or more example first electronic devices, the food items are cooked food items, such as pastries, bread, rice, and/or pasta.

In one or more example first electronic devices, the sensor data may be indicative of one or more environmental conditions of a food storage area. In one or more example first electronic devices, the environmental conditions may be indicative of one or more conditions, such as temperature, humidity, lighting, vibrations, gas composition, and/or pH.

In one or more examples, the sensor data may be indicative of movement in a storage area, such as a food storage area. For example, the sensor data can indicate if an employee is emptying and/or stocking a container of food items, and be used for further processing. For example, the movement data may be used to identify the number of employee visits in the food storage area per day, and number of times the doors of the food storage area is opened and/or closed. It is an advantage of the present disclosure that by identifying the movement inside the food storage area, and the number of times the doors are opened or closed, changes in the environment can be measured. The change in the environment inside the food storage area, due to movements, and day to day operations operations, may have impact on the quality of food items inside the food storage area, that the present disclosure assesses by controlling one or more criteria.

The first electronic device 300, 300A is configured to receive, from a second electronic device, control information comprising a plurality of criteria associated with the food items in the food storage area. In one or more example first electronic devices, the first electronic device is configured to communicate wirelessly with the second electronic device. Stated differently, the control information may be received wirelessly from the second electronic device.

In one or more example first electronic devices, the first electronic device 300, 300A may be configured to communicate (e.g. to receive and/or to transmit) with the second electronic device 400, via the interface circuitry 303, for example using wired and/or wireless communication. In one or more example first electronic devices, the second electronic device 400 may be a mobile phone, a server, a laptop, a tablet, a computer, a laptop, a relay device, a modem, an internet modem, an internet of things (IoT) device and/or a watch. The second electronic device 400 may be an internet of things (IoT) device.

In one or more example first electronic devices, the first electronic device 300, 300A may be configured to receive 10, from the second electronic device 400, control information comprising a plurality of criteria associated with the food items in the food storage area. In one or more examples, the plurality of criteria comprises a first criterion, a second criterion, and optionally a third criterion, and optionally a fourth criterion etc. The criteria may be based on one or more food parameters, such as a food type for each food item in the food storage area, and/or a storage duration for each food item in the food storage area.

In one or more example first electronic devices, the plurality of criteria may comprise one or more of: a temperature criterion, a humidity criterion, a gas criterion, a light criterion, a noise criterion, a vibration criterion, a liquid level criterion, a pH criterion, a pressure criterion, and a time criterion. For example, the temperature criterion may be based on a temperature unacceptable for a given food item. For example, the humidity criterion may be based on a humidity level unacceptable for a given food item. For example, the gas criterion may be based on a gas composition detected in the vicinity of a given food item. For example, the light criterion may be based on a light parameter for a given food item.

For example, the noise criterion may be based on an audio level unacceptable for a given food storage area. This may help identify if a ventilation system is not functioning properly (e.g. a broken piece of the ventilation system rattling).

For example, the noise criterion may be based on a noise level unacceptable for a given sensor. For example, the vibration criterion may be based on a vibration parameter unacceptable for a given food item. For example, the vibration criterion may be based on a frequency level unacceptable for a given food storage area (e.g. a truck that is shaking to a level that affects the food items transported). For example, the liquid level criterion may be based on a liquid level unacceptable for a given food item. For example, the pH criterion may be based on a pH range unacceptable (e.g. affecting negatively) for a given food item. For example, the pressure criterion may be based on a pressure unacceptable for a given food item. For example, the time criterion may be based on a time of storage for a given food item.

Each criterion of the plurality of criteria may be based on a threshold for a corresponding sensor data, such as a threshold for temperature, a threshold for humidity, and/or a threshold for gas composition.

In one or more example first electronic devices, one or more of the criteria may be associated with the storage conditions of the food item in the food storage area.

In one or more example first electronic devices, one or more of the criteria may be associated with a quality state of the food item in the food storage area.

In one or more example first electronic devices, one or more of the criteria may be associated with the spoilage condition(s) of the food item in the food storage area.

In one or more example first electronic devices, one or more of the criteria may be associated with the ripening condition(s) of the food item in the food storage area.

In one or more example first electronic devices, one or more of the criteria may be associated with the operating condition(s) the food storage area when the area is empty. For example, one or more of the criteria can be based on general operating conditions when no food items are stored in the food storage area.

In one or more example first electronic devices, the first electronic device 300, 300A is configured to control, based on the control information, the operating parameters of the one or more sensors. In one or more example first electronic devices, the first electronic device 300, 300A is configured to control the operation of the one or more sensors. For example, the first electronic device 300, 300A may be configured to control the operating voltages of the one or more sensors based on the control information received from the second electronic device 400. In one or more examples, the first electronic device 300, 300A may be configured to control the operating time of the one or more sensors. This may help to reduce the overheating of the sensors which in turn helps to reduce the noise in the sensor data.

In one or more example first electronic devices, the first electronic device 300, 300A comprises a battery. In one or more example first electronic devices, the first electronic device 300, 300A configured to operate using the battery.

In one or more example first electronic devices, the first electronic device 300, 300A may be configured to connect to the power outlet. In one or more example first electronic devices, the first electronic device 300, 300A is configured to operate continuously and/or periodically and/or by activation based on a triggering event. This may help to overcome the need of having a battery.

In one or more example first electronic devices, the first electronic device 300, 300A is configured to operate periodically. This may help to save the battery longevity. Further, this may help to reduce the device over heating which in turn helps improves the device life and reduces the noise in the sensor data.

The first electronic device 300, 300A is configured to determine whether the sensor data satisfies at least one of a plurality of criteria.

In one or more example first electronic devices, the first electronic device 300, 300A is configured to determine, using the processor circuitry 302, whether the sensor data satisfies at least one of a plurality of criteria.

In one or more example first electronic devices, one or more criterion of the plurality of criteria may be based on a range of values. The range of values may be numbers and/or percentages with intervals, for example a temperature criterion with a temperature range - 800C to 40C, -40C to 20C, -20C to 0C, -10C to 0C, -5C to 0C, 0C to 10C, 10C to 15C, 15C to 30C, or 30C to 100C, a humidity criterion with a humidity range, such as a relative humidity range 0 to 20%, 21 to 40%, 41 to 60%, 61- 70%, 71 to 75%, 76- 80%, 81-85%, 86-90%, 91-95%, or 96-100%, a gas criterion with a gas concentration range, such as concentration range 0 -100ppm, 101-150ppm, 151-300ppm, 301-500ppm, 501-700ppm, 701-1000ppm, 1001-1500ppm, 1501-2000ppm, 2001-3000ppm, 3001-10000ppm. A pH criterion with a pH range 0-1, 1.1-2, 2.1-3, 3.1-4.0, 4.1-5, 5.1-6, 6.1-7, 7.1-8, 8.1-9, 9.1-10, 10.1-11, 11.1-12, 12.1-13, 13.1-14.

In one or more example first electronic devices, the plurality of criteria may comprise one or more temperature criteria, one or more humidity criteria, one or more gas criteria, one or more light criteria, one or more pressure criteria, one or more liquid level criteria, one or more noise criteria, one or more pH criteria, one or more vibration criteria, and/or one or more time criteria. For example, the plurality of criteria may comprise a first temperature criteria that may be based on a first temperature range and a second temperature criteria that may be based on a second temperature range.

In one or more example first electronic devices, one or more of the plurality criteria may be based on a threshold, such as a threshold value. In other words, a criterion may be based on a comparison of the sensor data with a threshold for assessing if the criterion is met by the sensor data. In some examples, the threshold may be a lower bound of a range and/or an upper bound of a range.

In one or more example first electronic devices, the first electronic device 300, 300A is configured to determine whether the sensor data satisfies at least one of a plurality of criteria. For example, in accordance with the temperature data being within the temperature range, the first electronic device 300, 300A configured determine that the temperature data satisfies the temperature criterion. In one or more example first electronic devices, in accordance with the humidity data being within the humidity range, the first electronic device 300, 300A configured determine that the humidity data satisfies the humidity criterion. In one or more example first electronic devices, in accordance with the gas data being within the gas range, the first electronic device 300, 300A configured determine that the gas data satisfies the gas criterion.

In one or more example first electronic devices, in accordance with the sensor data, such as the temperature data being below or above the temperature range, the first electronic device 300, 300A may be configured determine that the temperature data does not satisfy at least one of the plurality of criteria, such as the temperature criterion.

In one or more example first electronic devices, in accordance with the sensor data, such as the humidity data being below or above the humidity range, the first electronic device 300, 300A may be configured determine that the humidity data does not satisfy the at least one of the plurality of criteria, such as the humidity criterion.

In one or more example first electronic devices, in accordance with the sensor data such as the gas data, such as ethylene gas data showing at least one value, being below or above the gas range, the first electronic device 300, 300A may be configured to determine that the gas data satisfies the gas criterion.

The first electronic device 300, 300A is configured to, in accordance with the determination that the sensor data does not satisfy at least one criterion of the plurality of criteria, transmit a message to the second electronic device.

In one or more example first electronic devices, the message is indicative of a ripening state of the food item and/or a spoiled state of the food item.

In one or more example first electronic devices, the message is indicative of spoiled state of the food item, e.g., rotten state. In one or more example first electronic devices, the message is indicative of a ripening state of the food item. In one or more example first electronic devices, the fruit ripening state may be indicative of the state of the fruit, such as raw state, ripening state, semi ripe, and/or fully ripe. A raw state can be seen as a state where the food item is not yet ripe for consumption. For example, in accordance with sensor data providing at least one sensor value being above or below a threshold, the first electronic device may be configured to determine that the sensor data does not satisfy at least one criterion. In one or more example first electronic devices, when the sensor data does not satisfy at least one of the criteria, the first electronic device 300, 300A may be configured to transmit 12A, via the interface circuitry 303, a message to the second electronic device 400.

In one or more example first electronic devices, the message may comprise sensor data, and/or an alert message. In some example, the message may comprise alert data, such as environmental conditions leading to the transmission of the message. For example, the sensor data shows a temperature value higher than a threshold provided in a criterion, the alter data may comprise information indicative of temperature value not meeting the criterion. This may allow a user to be notified and act accordingly to mitigate the risk of food waste due to high temperatures.

In one or more example first electronic devices, when the sensor data does not satisfy at least one criterion of the plurality of criteria, the first electronic device 300, 300A is configured transmit 10A a message to the second electronic device 400.

The second electronic device 400 may be configured to trigger one or more further operations (such as notifications, sounds, light, control of a second sensor, control of an actuator, e.g. for controlling ventilation) in response to the reception of the message from the first electronic device 300, 300A.

In one or more example first electronic devices, the plurality of criteria may comprise a first criterion, a second criterion, a third criterion, and a fourth criterion. In one or more example first electronic devices, the first criterion may be a temperature criterion (in that the temperature criterion evaluates temperature data), the second criterion may be a humidity criterion, the third criterion may be a gas criteria, such as a first gas criterion, and the fourth criterion may be a gas criterion, such a second gas criterion, and/or a liquid level criterion, and/or a light intensity criterion, and/or a vibration criterion, and/or a noise criterion, and/or a time criterion.

In one or more example first electronic devices, when the first electronic device determines that the sensor data does not satisfy at least one of the first criteria, the second criteria, the third criteria, and the fourth criteria, the first electronic device may be configured to transmit a message to the second electronic device 400. In other words, the first electronic device can via the sensor data and the appropriate set of criterion determine that for example the one or more environmental conditions inside the food storage area is not meeting at least one criterion, which is likely to be detrimental to the food items stored. For example, when the first electronic device determines that the sensor data obtained from the sensors does not meet at least criterion by being below or above a threshold (e.g. the temperature is low, humidity is high, or the presence of ripening gas or spoilage is provided in the sensor data), the first electronic device may transmit a message to the second electronic device, e.g. to notify of the condition detected. For example, when the sensor data indicates that the one or more environmental conditions inside the food storage area is not meeting the limits recommended, based on the control information (including at least one criterion), the first electronic device transmits a message to the second electronic device. The message may be an alert message. The message may comprise the sensor data, and the alert message.

In one or more example first electronic devices, the one or more of the first sensor data, the second sensor data, the first gas sensor data, and second gas sensor data may be indicative of one or more environmental conditions of a food storage aera. In one or more example first electronic devices, the sensor data may comprise one or more of the first sensor data, the second sensor data, the first gas sensor data, and second gas sensor data.

In one or more example first electronic devices, the first gas data, and the second gas data may be associated with same gas composition.

In one or more example first electronic devices, the first gas data, and the second gas data may be associated with different gas compositions.

In one or more example first electronic devices, the first electronic device 300, 300A is configured to transmit to the second electronic device 400 as part of the message and/or separately: a first data set comprising sensor data, and/or a device identifier of the sensor providing the sensor data. In one or more example first electronic devices, the first electronic device 300, 300A may be configured to transmit a first data set comprising sensor data.

In one or more example first electronic devices, the first electronic device 300, 300A may be configured to transmit a message comprising the first data set.

In one or more example first electronic devices, the first electronic device 300, 300A may be configured to transmit a first data set comprising a device identifier and/or a location information associated with a location of the sensor providing the sensor data.

In one or more example first electronic devices, the first electronic device 300, 300A may be configured to transmit a first data set comprising operating conditions of the one or more sensors, such as the first sensor 501, the second sensor 502, the third sensor 503 and the fourth sensor 504.

In one or more example first electronic devices, the first electronic device 300, 300A may be configured to selectively obtain the sensor data from the one or more sensors e.g. by activating selectively one or more sensors and/or by requesting sensor data from a selected sensor.

For example, the first electronic device 300, 300A may obtain data from the first sensor 501 at any time, while obtaining the sensor data obtained from the second sensor 502 only upon request if at all. In one or more example first electronic devices, the first electronic device 300, 300A may be configured to selectively activate the one or more sensors. For example, the first electronic device 300, 300A may be configured to activate (e.g. via the control information with a schedule, and/or via activating signal(s)) the first sensor 501 at a first time, the second sensor 502 at a second time, the third sensor 503 at a third time, and the fourth sensor 504 at a fourth time. In one or more example first electronic devices, the first time, the second time, the third time, and fourth time may be indicative of a time slot where the corresponding sensor is to be active and optionally reporting sensor data. In one or more example first electronic devices, the first time, the second time, the third time, and fourth time may be separated by respective time intervals which may be periodic.

In one or more example first electronic devices, the message comprises a notification indicative of a state of one or more food items, and/or the sensor data. In one or more example first electronic devices, the message comprises the sensor data from a given sensor and/or the notification indicative of a state of a food item.

In one or more example first electronic devices, the state of the one or more food items represents the condition of the one or more food items (e.g. one or more fruits). In one or more example first electronic devices, the state of the food item represents the condition of the food item. For example, the state is for example an acceptable state (e.g., a ripening state, a ripe state, a raw state (e.g. freshly harvested, and not ready to eat, e.g. green bananas), an unacceptable state, (e.g. a spoiled state).

In one or more example first electronic devices, the notification comprises alert data indicative of spoilage of the one or more food items. In other words, the food item is spoiled, the sensor data by not meeting at least one criterion indicates that the food item is spoiled, and a message is generated and sent by the first electronic device with a notification comprising alert data which notifies and/or alerts the second electronic device of the spoilage so that an action can be taken (e.g. activating another sensor (e.g. a camera, a gas sensor) to confirm the spoilage notified).

In one or more example first electronic devices, the first electronic device 300, 300A may be configured to determine, based on the sensor data, the state of the one or more food items.

In one or more example first electronic devices, the first electronic device 300, 300A comprises a speaker configured to generate, based on the message, an audio signal. In one or more example first electronic devices, the speaker, such as the speaker 505, may be a speaker internal to the first electronic device 300A. In one or more example first electronic devices, the speaker, such as the speaker 505, may be external to the first electronic device 300.

In one or more example first electronic devices, the first electronic device may be configured to activate the speaker (internal and/or external) when the sensor data does not satisfy at least one criterion of the plurality of criteria, e.g. to emit an audio signal, such as an audio signal perceivable by a person in the food storage area and/or by a microphone in the food storage area.

In one or more example first electronic devices, the first electronic device 300, 300A may be configured to activate the speaker when the first electronic device 300, 300A identify that one or more sensors are not functioning correctly.

In one or more example first electronic devices, the first electronic device 300, 300A comprises a light source configured to generate, based on the message, a light signal. In one or more example first electronic devices, the first electronic device 300, 300A may be configured to activate the light source for emission of a light signal (e.g. a blinking signal) when the sensor data does not satisfy the at least one criterion of the plurality of criteria. In one or more example first electronic devices, the light source, such as the light source 506, may be internal to the first electronic device. In one or more example first electronic devices, the light source, such as the light source 506, may be external to the first electronic device 300, 300A. In one or more example first electronic devices, the light source may be a Light Emitting Diode, LED.

In one or more example first electronic devices, the first electronic device 300, 300A may be configured to activate the light source when the sensor data does not satisfy the at least one criterion of the plurality of criteria.

In one or more example first electronic devices, the first electronic device 300, 300A may be configured to identify when one or more sensors are not functioning correctly. In other words, the first electronic device may be configured to identify the broken sensor when the sensor does not operate correctly (such as, stopped working and/or need of maintenance and/or calibration).

In one or more example first electronic devices, the first electronic device 300, 300A may be configured to activate the light source when the first electronic device 300, 300A identifies one or more sensors are not functioning correctly.

In one or more example first electronic devices, the first electronic device 300, 300A may be configured to transmit an additional message when the first electronic device 300, 300A identifies one or more sensors which are not functioning correctly.

In one or more example first electronic devices, the first electronic device 300, 300A may be configured to attached to a wall, a rack, a shelf, a metal surface, or a wooden base. In one or more example first electronic devices, the first electronic device 300, 300A may comprise a housing in the shape of an octagon, a hexagon, a decagon, a sphere, a hemisphere, or a cube. It may be an advantage for the first electronic device to have a hexagon shape as the hexagon shape may have a better air flow which helps to improve the accuracy in measurement of the environmental factors in a storage area, such as food storage areas.

In one or more example first electronic devices, the first electronic device 300, 300A may comprise a housing in the shape of the letter L. This shape may help to place the first electronic device in the corners. Further, placing the one or more sensors on side the "L" shape and all the processing circuitry on the other side of the "L" shape may reduce the interference. For example, the heat generated by the processor circuitry may not influence the one or more sensor data, for example, temperature data.

In one or more example first electronic devices, the first electronic device 300, 300A may be configured to store, using the memory circuitry 301, the sensor data, one or more of the plurality of criteria, control information, and messages.

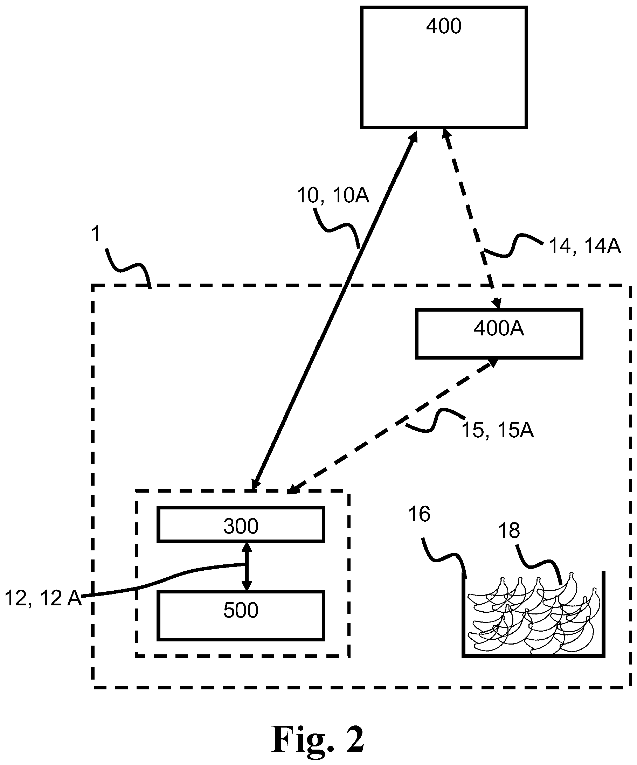

Fig. 2 is a schematic diagram illustrates a scenario where the first electronic device 300 is placed in a food storage area 1, such as a cold storage area. The food storage area 1 may be a room, such as a ripening facility. The food storage area 1 may be used for storing food items, such as fresh produce 18, such as fruits, vegetables, grains, and/or dairy products (e.g. cheese stored inside of the food storage area. The fresh produce 18 may be placed in a container 16, such as boxes or bags. The container 16 may be an open container where the fresh produce is not sealed. The food storage area 1 and/or container 16 may have ventilation.

The first electronic device 300 may be placed on a wall of the food storage area 1. The first electronic device 300 may comprise a sensor module 500. The sensor module 500 may comprise a temperature sensor, a humidity sensor, a first gas sensor, and a second gas sensor. The sensors may be swappable, in that the sensor module may comprise various combinations of sensor types.

The disclosed system may include a gateway device 400, 400A. The food storage area may be equipped with a gateway device 400A. The gateway device 400A may be configured to communicate 15, 15A with the first electronic device 300. The gateway device 400A may be configured to communicate. 14, 14A with the second electronic device 400. The gateway device 400A may be configured to connect, via a wired connection and/or a wireless connection, with the first electronic device 300, and/or the second electronic device 400.

In Fig. 2, the first electronic device 300 obtains 12 sensor data from the temperature sensor, the humidity sensor, the first gas sensor, and the second gas sensor. The sensor data provides information (such as measurements) about the environmental conditions of the food storage area. The temperature data is indicative of temperature in the food storage area 1. The humidity data is indicative of humidity in the food storage area 1. The first gas data, from the first gas sensor, is indicative of a gas, such as Carbon dioxide, composition in the environment inside of the food storage area 1. The second gas data, from the second gas sensor, is indicative of a gas, such as methane, composition in the environment inside of the food storage area 1.

The first electronic device 300 receives 10, from the second electronic device 400, control information. The first electronic device 300 may receive 15 control information from the second electronic device 400 via the gateway device 400A.

The control information may comprise a plurality of criteria associated with the food items 18 in the food storage area 1. The criteria may be associated with the environmental conditions inside 12 the food storage area 1 to store the food items 18. For example, when fruits are stored inside the storage room 1, the first electronic device 300 receives control information comprising criteria associated with fruits. In another words, when bananas are stored the food storage area 1, the control information may comprise criteria that are tailored for appropriate storage conditions, such as temperature, humidity, and gas composition, of bananas, and/or tailored for detecting spoilage of a banana.

The first electronic device 300 determines whether the sensor data satisfies at least one criterion of the plurality criteria received form the second electronic device 400. In another words, the first electronic device 300 verify whether the environmental conditions inside the food storage area 1 satisfies one or more criteria, and when one criterion is not satisfied by the sensor data, the first electronic device transmits a message for alerting the second electronic device 400. For example, the first electronic device 300 determines whether the concentration of the methane, and the concentration of ethylene inside the food storage area 1 as captured in the sensor data are within the acceptable range.

In an example scenario where the disclosed technique is applied, when the senor data does not satisfy at least one of the criteria received from the second electronic device 400, the first electronic device 300 transmits a message to the second electronic device 400. In other words, the first electronic device 300 verifies whether the environmental conditions inside 2 the food storage area 1 as captured by the sensor meet one or more of the plurality of criteria, and if one criterion is not satisfied by the sensor data, the first electronic device sends a message to the second electronic device 400. For example, the first electronic device 300 verifies whether the concentration of the methane, and the concentration of ethylene inside the food storage area 1 are within the range provided by one or more criteria of the control information. For example, when the concentration of methane and/or ethylene is not within the range provided, then the first electronic device 300 sends a message to the second electronic device 400.

The message may be indicative of an alert. For example, If the concentration of methane and/or ethylene is not within the provided range then the first electronic device 300 may send a "out of limits", "bad", "critical", "spoilage detected", or "ripening in progress" message along with the sensor data to the second electronic device 400.

The first electronic device 300 transmit the message to the second electronic device 400 via gateway device 400A. In one or more example scenarios, when the senor data does not meet at least one of the criteria received from the second electronic device 400, the first electronic device 300 transmits a message to the second electronic device 400. The message may comprise sensor data. For example, when the temperature, humidity, concentration of methane, and ethylene are outside the range then the first electronic device 300 may send a "all good", "under control", "ok", or "good" message along with the sensor data to the second electronic device 400.

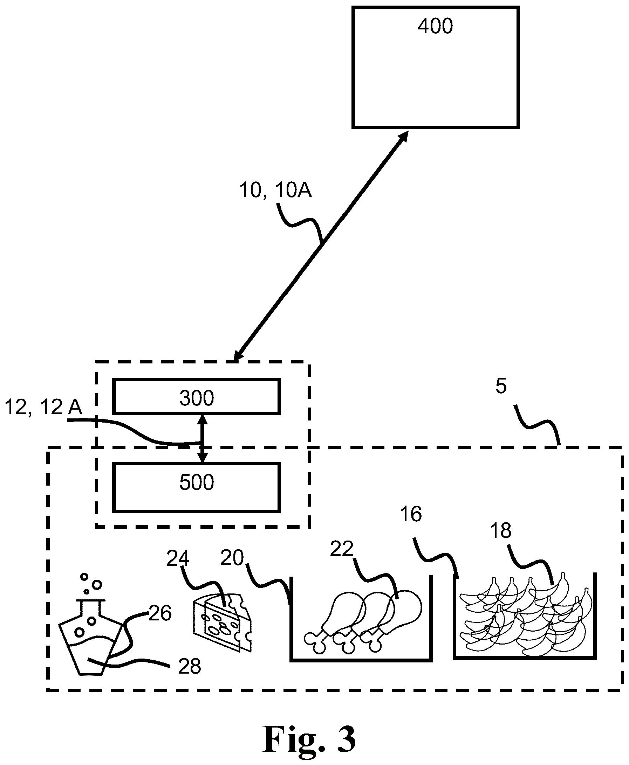

Fig. 3 is a schematic diagram illustrating a scenario where the first electronic device 300 under use in a food storage area 5, such as a refrigeration area, a truck, a container, a tank, such as a fermentation tank, a milk tank, and/or a sealed container, such as a cold box.

The food storage area 5 may have food items, such as fruits, vegetables, grains, meat, milk, grains, or dairy products stored inside of the food storage area. The food items 18, 22 may be places in a container 16, 20 such as boxes or bags. The food items, such as milk 28 may be placed in a bottle 26. The container 16, 20, 26 are open containers where the fresh produce is not sealed. The food storage area 5 may have no ventilation.

The first electronic device 300 may comprise a sensor module 500. The sensor module 500 may comprise a temperature sensor, a humidity sensor, a gas sensor, and a liquid sensor. In an example, the sensor module 500 is external the first electronic device 300 where the sensor module 500 is placed inside of the food storage area 5, and the first electronic device 300 is placed outside the food storage area. The first electronic device 300 may obtain (e.g. receive) sensor data from the sensor module 500.

The first electronic device 300 receives control information from the second electronic device 400. The control information comprises the plurality of criteria associated with the food items, such as food items 18, 22, 28 in the food storage area 5. In other words, the control information comprises the plurality of criteria associated with the conditions, such as the environmental conditions, in which the food items are stored in a food storage area 5.

In an example scenario, when the one or more of the environmental conditions, such as temperature, humidity, gas composition/percentage, liquid level, pH value, noise levels, and/or vibration level, inside the food storage area 5 change, and at least one of the environmental conditions is not within the range provided in one of the criteria, the first electronic device 300 sends an alert message to the second electronic device 400. The change in the one or more environmental conditions may be indicative of spoilage of the one or more food items stored in the food storage area.

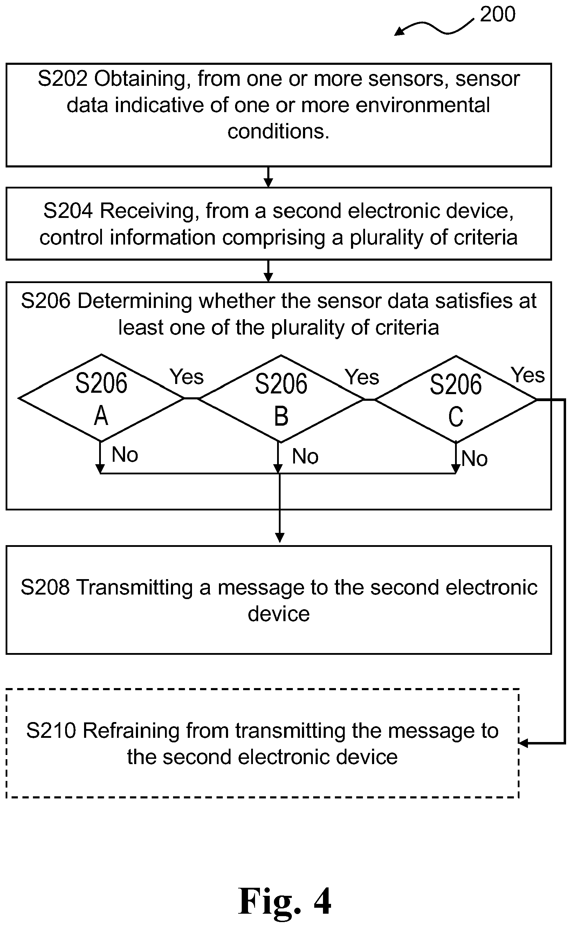

Fig. 4 shows a flow-chart illustrating an example method 200 performed by an electronic device according to the disclosure. The method 200 may be performed by a first electronic device 300, such as a food monitoring device, such as a food storage device. The method 200 may be performed by the first electronic device disclosed herein, such as the first electronic device 300, 300A of Fig. 1, Fig. 2, Fig. 3, and Fig. 4

The method 200 comprises obtaining S202, from one or more sensors, sensor data indicative of one or more environmental conditions of a food storage area for storing food items. In one or mor example methods, the sensor data comprises one or more of: temperature data, humidity data, and gas composition data. In one or mor example methods, the gas composition data comprises one or more of: carbon dioxide data, oxygen data, methane data, ethylene data, hydrogen sulphide data, nitrogen dioxide data, nitrogen data, and hydrogen data. In one or mor example methods, the food items are unsealed fresh produce comprising one or more of: fruits, vegetables, meat, grains, and dairy products.

The method 200 comprises receiving S204, from a second electronic device, control information comprising a plurality of criteria associated with the food items in the food storage area.

The method 200 comprises determining S206 whether the sensor data satisfies at least one of a plurality of criteria, such a first criterion S206A, a second criterion S206B, a third criterion S206C, and a fourth criterion S206D.

The method 200 comprises, in accordance with the determination that the sensor data does not satisfy at least one criterion of the plurality of criteria, transmitting S208 a message to the second electronic device. For example, the message is transmitted to the second electronic device when the sensor data does not meet the first criterion, or when the sensor data does not meet the second criterion, or when the sensor data does not meet the third criterion, or when the sensor data does not meet the fourth criterion.

In one or more example methods, the method 200 comprises, in accordance with the determination that the sensor data satisfies at least one of a plurality of criteria, refraining S210 from transmitting the message to the second electronic device. In one or more methods, the message is indicative of food spoilage and/or of a ripe state.

In one or more example methods, the message may comprise the sensor data, and/or a device identifier. In some example, the method 200 may comprise transmitting a first data set comprising sensor data, and/or a device identifier to the second electronic device.

In one or more example methods, the method 200 may comprise generating audio signal, based on the based on the message, and optionally causing a loudspeaker to emit the audio signal in response to the message. In one or more example methods, the method 200 may comprise activating the speaker, based on the based on the message.

In one or more example methods, the method 200 may comprise generating audio signal, based on the based on the first dataset.

In one more example methods, the method 200 may comprise generating light signal, based on the based on the message, and optionally causing a light source to emit the light signal in response to the message.

In one or more example methods, the method 200 may comprise activating the light source, based on the based on the message.

In one or more example methods, the method 200 may comprise generating light signal, based on the based on the first dataset.

In one or more example methods, the method 200 comprises identifying whether the one or more sensors working correctly, e.g., the sensors working as anticipated, and no calibration needed.

In one or more example methods, the method 200 comprises transmitting an additional message to the second electronic device when one or more sensors are not working correctly.

In one more example methods, the method 200 may comprise controlling, based on the control information, the one or more operating parameters of the one or more sensors.

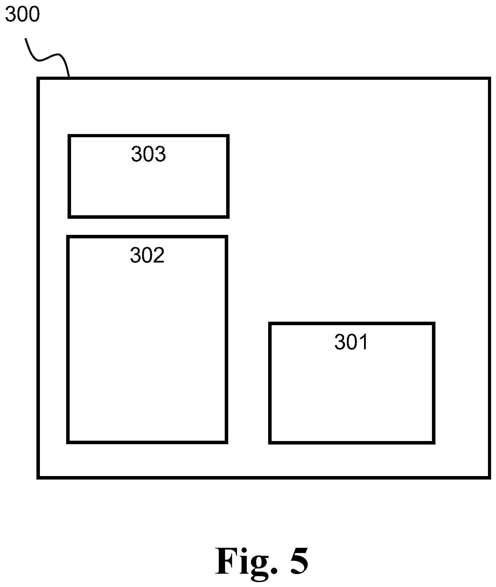

Fig. 5 shows a block diagram of an example first electronic device 300 according to the disclosure. The first electronic device 300 comprises memory circuitry 301, processor circuitry 302, and an interface circuitry 303. The electronic device 300 may be configured to perform any of the methods disclosed in Fig. 4.

The first electronic device 300 is configured to obtain (such as via the interface circuitry 303), from one or more sensors, sensor data indicative of one or more environmental conditions of a food storage area for storing food items.

The first electronic device 300 is configured to receive (such as via the interface circuitry 303), from a second electronic device, control information comprising a plurality of criteria associated with the food items in the food storage area.

The first electronic device 300 is configured to determine (such as using the processor circuitry 302) whether the sensor data satisfies at least one of the plurality of criteria.

The first electronic device 300 is configured to, in accordance with the determination that the sensor data satisfies the at least one criterion of the plurality of criteria, transmit (such as via the interface circuitry 303) a message to the second electronic device.

The electronic device 300 is optionally configured to perform any of the operations disclosed in Fig. 4 (such as any one or more of S210). The operations of the first electronic device 300 may be embodied in the form of executable logic routines (for example, lines of code, software programs, etc.) that are stored on a non-transitory computer readable medium (for example, memory circuitry 301) and are executed by processor circuitry 302).

Furthermore, the operations of the electronic device 300 may be considered a method that the electronic device 300 is configured to carry out. Also, while the described functions and operations may be implemented in software, such functionality may as well be carried out via dedicated hardware or firmware, or some combination of hardware, firmware and/or software.

Memory circuitry 301 may be one or more of a buffer, a flash memory, a hard drive, a removable media, a volatile memory, a non-volatile memory, a random access memory (RAM), or other suitable device. In a typical arrangement, memory circuitry 301 may include a non-volatile memory for long term data storage and a volatile memory that functions as system memory for processor circuitry 302. Memory circuitry 301 may exchange data with processor circuitry 302 over a data bus. Control lines and an address bus between memory circuitry 301 and processor circuitry 302 also may be present (not shown in Fig. 5). Memory circuitry 301 is considered a non-transitory computer readable medium.

Memory circuitry 301 may be configured to store information (such as information indicative of second set of paging resources) in a part of the memory.

Embodiments of methods and products according to the disclosure are set out in the following items:
Item 1. A first electronic device (300) comprising:
   memory circuitry (301); interface circuitry (303); and processor circuitry (302); wherein the first electronic device is configured to;
   obtain, from one or more sensors, sensor data indicative of one or more environmental conditions of a food storage area for storing food items;
   receive, from a second electronic device, control information comprising a plurality of criteria associated with the food items in the food storage area;
   determine whether the sensor data satisfies at least one of a plurality of criteria; and in accordance with the determination that the sensor data does not satisfy at least one criterion of the plurality of criteria, transmit a message to the second electronic device.;
Item 2. The first electronic device according to item 1, wherein the sensor data comprises one or more of: temperature data, humidity data, and gas composition data. Item 3. The first electronic device according to any of the preceding items, wherein the gas composition data comprises one or more of: carbon dioxide data, oxygen data, methane data, ethylene data, hydrogen sulfide data, nitrogen dioxide data, nitrogen data, and hydrogen data.
Item 4. The first electronic device according to any of the preceding items, wherein the first electronic device is configured to communicate wirelessly with the second electronic device.
Item 5. The first electronic device according to any of the preceding items, wherein the food items are unsealed fresh produce comprising one or more of: fruits, vegetables, meat, grains, and dairy products.
Item 6. The first electronic device according to any of the preceding items, wherein the one or more sensors comprise one or more sensors internal to the first electronic device, and/or one or more sensors external to the first electronic device.
Item 7. The first electronic device according to any of the preceding items, wherein the first electronic device comprises one or more of:
   - a first sensor (501) configured to obtain first sensor data;
   - a second sensor (502) configured to obtain second sensor data;
   - a first gas sensor (503) configured to obtain first gas data; and
   - a second gas sensor (504) configured to obtain second gas data.
Item 8. The first electronic device according to any of the preceding items, wherein the first electronic device is configured to transmit to the second electronic device a first data set comprising sensor data, and/or a device identifier.
Item 9. The first electronic device according to any of the preceding items, wherein the message comprises a notification indicative of a state of one or more food items, and/or the sensor data.
Item 10. The first electronic device according to item 9, wherein the notification comprises alert data indicative of spoilage of the one or more food items.
Item 11. The first electronic device according to any of the preceding items, wherein the first electronic is configured to control, based on the control information, the operating parameters of the one or more sensors.
Item 12. The first electronic device according to any of the preceding items, wherein the first electronic device comprises a speaker configured to generate, based on the message, an audio signal.
Item 13. The first electronic device according to any of the preceding items, wherein the first electronic device comprises a light source configured to generate, based on the message, a light signal.
Item 14. The first electronic device according to any of the preceding items, wherein the message is indicative of a ripening state of the food item and/or a spoiled state of the food item.
Item 15. A method performed by a first electronic device comprising;
   obtaining, from one or more sensors, sensor data indicative of one or more environmental conditions of a food storage area for storing food items;
   receiving, from a second electronic device, control information comprising a plurality of criteria associated with the food items in the food storage area;
   determining whether the sensor data satisfies at least one of a plurality of criteria;
   and in accordance with the determination that the sensor data does not satisfy at least one criterion of the plurality of criteria, transmitting a message to the second electronic device.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the Figures comprises some circuitries or operations which are illustrated with a solid line and some circuitries or operations which are illustrated with a dashed line. Circuitries or operations which are comprised in a solid line are circuitries or operations which are comprised in the broadest example embodiment. Circuitries or operations which are comprised in a dashed line are example embodiments which may be comprised in, or a part of, or are further circuitries or operations which may be taken in addition to circuitries or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed. It is to be noted that the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example methods, devices, nodes, and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A first electronic device (300) comprising:
memory circuitry (301);
interface circuitry (303); and
processor circuitry (302);
wherein the first electronic device is configured to;
obtain, from one or more sensors, sensor data indicative of one or more environmental conditions of a food storage area for storing food items;
receive, from a second electronic device, control information comprising a plurality of criteria associated with the food items in the food storage area;
determine whether the sensor data satisfies at least one of a plurality of criteria; and
in accordance with the determination that the sensor data does not satisfy at least one criterion of the plurality of criteria, transmit a message to the second electronic device.;

2. The first electronic device according to claim 1, wherein the sensor data comprises one or more of: temperature data, humidity data, and gas composition data.

3. The first electronic device according to any of the preceding claims, wherein the gas composition data comprises one or more of: carbon dioxide data, oxygen data, methane data, ethylene data, hydrogen sulfide data, nitrogen dioxide data, nitrogen data, and hydrogen data.

4. The first electronic device according to any of the preceding claims, wherein the first electronic device is configured to communicate wirelessly with the second electronic device.

5. The first electronic device according to any of the preceding claims, wherein the food items are unsealed fresh produce comprising one or more of: fruits, vegetables, meat, grains, and dairy products.

6. The first electronic device according to any of the preceding claims, wherein the one or more sensors comprise one or more sensors internal to the first electronic device, and/or one or more sensors external to the first electronic device.

7. The first electronic device according to any of the preceding claims, wherein the first electronic device comprises one or more of:
- a first sensor (501) configured to obtain first sensor data;
- a second sensor (502) configured to obtain second sensor data;
- a first gas sensor (503) configured to obtain first gas data; and
- a second gas sensor (504) configured to obtain second gas data.

8. The first electronic device according to any of the preceding claims, wherein the first electronic device is configured to transmit to the second electronic device a first data set comprising sensor data, and/or a device identifier.

9. The first electronic device according to any of the preceding claims, wherein the message comprises a notification indicative of a state of one or more food items, and/or the sensor data.

10. The first electronic device according to claim 9, wherein the notification comprises alert data indicative of spoilage of the one or more food items.

11. The first electronic device according to any of the preceding claims, wherein the first electronic is configured to control, based on the control information, the operating parameters of the one or more sensors.

12. The first electronic device according to any of the preceding claims, wherein the first electronic device comprises a speaker configured to generate, based on the message, an audio signal.

13. The first electronic device according to any of the preceding claims, wherein the first electronic device comprises a light source configured to generate, based on the message, a light signal.

14. The first electronic device according to any of the preceding claims, wherein the message is indicative of a ripening state of the food item and/or a spoiled state of the food item.

15. A method, performed by a first electronic device, the method comprising;
obtaining, from one or more sensors, sensor data indicative of one or more environmental conditions of a food storage area for storing food items;
receiving, from a second electronic device, control information comprising a plurality of criteria associated with the food items in the food storage area;
determining whether the sensor data satisfies at least one of a plurality of criteria; and
in accordance with the determination that the sensor data does not satisfy at least one criterion of the plurality of criteria, transmitting a message to the second electronic device.
